# EUROPEAN PATENT SPECIFICATION

(11) **EP 2 078 889 B1**
(45) Date of publication and mention of the grant of the patent: **25.03.2015**
(21) Application number: 07794099.7
(22) Date of filing: 01.08.2007
(51) Int. Cl.: F16K 5/06, F16K 27/06, F16K 27/10

(54) **BALL COCK-CONDENSATE ACCUMULATOR**
KUGELVENTILKONDENSAT-AKKUMULATOR
ROBINET À TOURNANT SPHÉRIQUE DESTINÉ À LA COLLECTE DE CONDENSAT

(30) Priority: 03.11.2006 RU 2006138949
(43) Date of publication of application: 15.07.2009
(73) Proprietor: Otkrytoe Aktsionernoe Obschestvo "Volgogradneftemash", Volgograd 400011 (RU)
(72) Inventor: LAZAREV, Aleksandr Vladimirovich, Volgograd, 400019 (RU); PAVLOV, Yury Konstantinovich, Volgograd, 400066 (RU); PAVLOV, Aleksandr Aleksandrovich, Volgograd, 400005 (RU); GOLUBEV, Valery Aleksandrovich, St.Petersburg, 199155 (RU); SALYUKOV, Vyacheslav Vasilyevich, Moscow, 117418 (RU); MUTALLIM-ZADE, Nasib Fataly Ogly, Moscow, 123458 (RU)
(74) Representative: Zacco Denmark A/S
(86) International application number: PCT/RU2007/000418
(87) International publication number: WO 2008/054242

(56) References cited:
- EP-A1- 0 350 017
- JP-A- 52 105 333
- RU-U1- 41 504
- SU-A1- 1 654 622
- SU-A1- 1 654 622
- US-A- 4 117 694
- US-A- 6 065 736
- US-A1- 2003 066 982
- US-A1- 2004 250 862

## Description

The present invention relates to pipeline valves and accessories, to ball cocks for gasmain and industrial gas pipelines used in transportation of gas containing a condensate with mechanical impurities, said cocks providing, at a predetermined service life, passage of gas, cleaning and diagnosing equipment, reliability in chocking the gas stream against action of mechanical impurities, and removal of the condensate.

Technical functionality of ball cocks is determined in standard-technical documents (STD) of the Open Joint-Stock Company (OJSC) "Gasprom" and in reference books.

Known is a ball cock according to RU Patent Nº 2,226,632, IPC F16K 5/06, F16K 27/10, published on April 10, 2004, said ball cock comprising: a welded body with inlet and outlet pipe junctions welded by a central weld; a welded-in spindle (bush) flange and a removable plug drive flange; a flush rotary (removable upper and welded-in-body lower) support ball plug; and two spring-loaded seats with sealing rings mounted into the pipe junctions so as to interact with a surface of the ball plug. The ball cock is provided with the through hole DN of Japan companies "Kobe-Steel" and "Kubota", and with dimensions according to D₁N and L according to the standard API 6D.

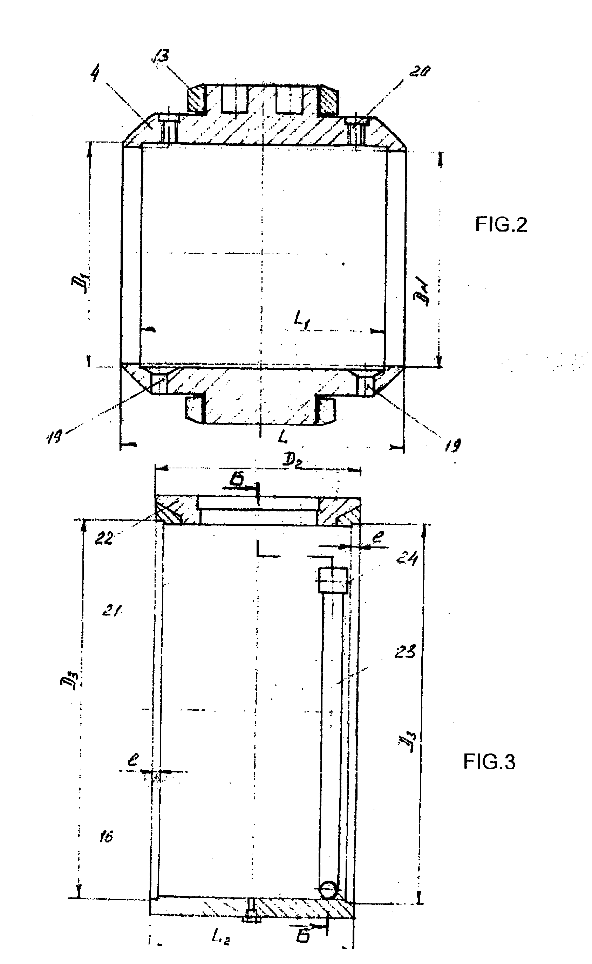

The prior art ball cock has disadvantages as follows:
- a passage diameter D₁N of the cock corresponds to API 6D in accordance with the inch measuring system, with a dimension being less than an internal diameter D of a header pipe made in accordance with appropriate GOSTs and corresponding to the metric measuring system;
- the cock excludes the possibility of passing the cleaning and diagnosing equipment because of reduction in the passage diameter as compared to a header pipe in cocks DN 300-400 mm by 4-74,6 mm;
- the cock reduces the actual gas passage (delivery) volume in main pipelines having DN 300-1400 mm and PN 6.4 MPa by 6.8-1254.42 millions of cubic meters per year;
- the cock reduces pick-up of the condensate therein, and a portion of the condensate "jumps up" and flies over the cock when passes through the cock having a reduced diameter;
- use and weld-in of transitional rings between the cock and a header pipe are necessary;
- the sealing rings of the seats are not protected against destruction by mechanical impurities entering a gap between the plug and the seat from the pipeline, which reduces the service life of the cock in connection with the plug leak-proofness;
- the cock is poor appropriate to repair because the cut of the cock along the weld into two symmetrical parts and the separation thereof require to cut the bush of the upper support, the lower support and the plug in order to release the lower support from the plug (see Fig. 2).

Known a ball cock according to RU Nº 41,504 U1 IPC F16K 5/20, published on October 27, 2004. The cock comprises: a non-detachable body with inlet and outlet pipe junctions; a rotary-on-supports ball plug placed within the body and comprising a spherical shell, supports and a housing coupled between each other; seats having sealing rings and welded to each other, said rings being mounted in the pipe junctions so as to interact with a surface of the ball plug; and springs pressing the seats to the plug.

The cock is flush, a passage diameter DN of the plug, pipe junctions and seats equals to an internal diameter D of a pipe to be welded, which eliminates hydraulic losses in the cock, provides passage of the cleaning and diagnosing equipment, and provides partial pick-up of the condensate via a central opening in the plug.

The prior art ball cock has disadvantages as follows:
- the sealing rings of the seats are not protected against destruction by mechanical impurities entering a gap between the plug and the seat from the pipeline, which reduces the service life of the cock in connection with the plug leak-proofness;
- the cock has the limited maintainability.

Known is a ball cock having D_{y} 700, 1000, 1200, 1400 mm and with P_{y} 12.5 MPa for underground and overhead constructions, as shown in Figs. 3.15, 3.16, 3.17 (see D.F. Gurevich, O.N. Zarinsky, and Ju.K. Kuz'min. "Spravochnik po Armature dlya Gaso- i nefteprovodov", Leningrad, "Nedra", 1988, pp. 134-142) - the prototype.

The cock comprises a welded body with inlet and outlet pipe junctions and a spindle flange and a plug drive, a flush rotary-on-supports ball plug, two spring-loaded seats with sealing rings and holders mounted into the pipe junctions so as to interact with a surface of the ball plug; and a condensate conduit.

The prototype has the disadvantages as follows:
- a passage diameter D₁N of the cock is less than an internal diameter D of a header pipe, while the end faces of the flanges in the cock are bored from D₁N to D (see Fig. 3.17), which
- reduces the actual gas passage (delivery) volume in main pipelines having DN 300-1400 mm and PN 6.4 MPa by 6.8-1254.42 millions of cubic meters per year;
- makes passage of the cleaning and diagnosing equipment difficult;
- reduces the condensate pick-up volume in the cocks;
- the cock has the limited maintainability;
- the sealing rings of the seats are not protected against destruction by mechanical impurities entering a gap between the plug and the seat from the pipeline, which reduces the service life of the cock in connection with the plug leak-proofness;
- the condensate conduit is outside of the cock (see: Fig. 3.17, reference numeral 26, the Description, page 141; and Fig. 3.15, reference numeral 21, the Description, page 136), which results in freezing of the condensate and infringement of the requirements imposed upon strengthening of the pipeline, see PB 03-585-03, Par. 5.2.14.

Another known ball cock is disclosed in SU 1654622 A1.

It is an object of the present invention to broaden the technical functionality of the cock in part of catching, collecting, and removing the condensate out of the pipeline, and prolonging the service life of the cock in part of protection of the sealing rings against destruction by mechanical impurities, and improvement in the maintainability of the cock.

The essence of the invention is that, in a ball cock comprising a welded body with inlet and outlet pipe junctions, a drainage conduit, spindle flanges and a plug drive, a flush rotary-on-supports ball plug; two spring-loaded seats with sealing rings and holders mounted into the pipe junctions so as to interact with a surface of the ball plug, the flush rotary-on-supports ball plug being made by different production methods is provided with a central bore of a passage diameter DN having a dimension D₁ larger than an internal diameter D of a header pipe over a length L₁ and with two drain openings having lead-in chamfers positioned at the bore end faces in the center of the plug bottom, and the drainage conduit is made of two - internal and external - parts, the internal part being formed as a curvilinear pipe with a beveled inlet end face and a straight outlet end face welded to a transition for exiting out of the body, wherein the inlet end face is arranged in the center of a bottom of a semi-body and the outlet end face is made of a pipe welded to the body, a ball stopcock and an outlet pipe junction.

Further, the welded body is made of a semi-body and two pipe junctions assembled with the flush rotary ball plug, two seats and between each other for two one-sided lock welds, of the welded drainage conduit and a removable plug drive flange, wherein the semi-body is formed as a cylindrical shell and a spindle flange in the form of a pipe junction welded to the shell normally to an axis thereof in the middle of its length taken depending upon the possibility of placing and welding a curvilinear pipe of the internal part of the drainage conduit to the shell, an external diameter of the spindle flange and the most distance of two lock welds from the sealing rings of the seats in welding the body, with the spindle and shell branch pipe diameter end face bores, and each pipe junction comprises a spherical pipe junction, two stops to support bearings of the flush rotary ball plug, a conduit for supplying a transported gas to the body, and a back pressure valve with an opening for a removable manometer, wherein the spherical pipe junction is provided with a spherical surface of positive and negative curvature in a zone of placing the spring-loaded seat, and of a cylindrical-shape section in a zone of a small diameter of the seat holder, and with the internal surface formed as concentric stepped cylindrical surfaces from the passage diameter DN to a protrusion diameter of a lock for assembling with the semi-body and parallel end faces of steps, and a lower stop of the outlet pipe junction is provided with an annular recess.

Furthermore, each spring-loaded seat with the sealing ring and the holder is provided with a protective spring-loaded brass ring contacting the ball surface of the plug and being mounted in a blind annular groove with spring holes, springs pressing said protective ring to the plug, and lock screws preventing the protective ring from falling out of the holder under action of springs.

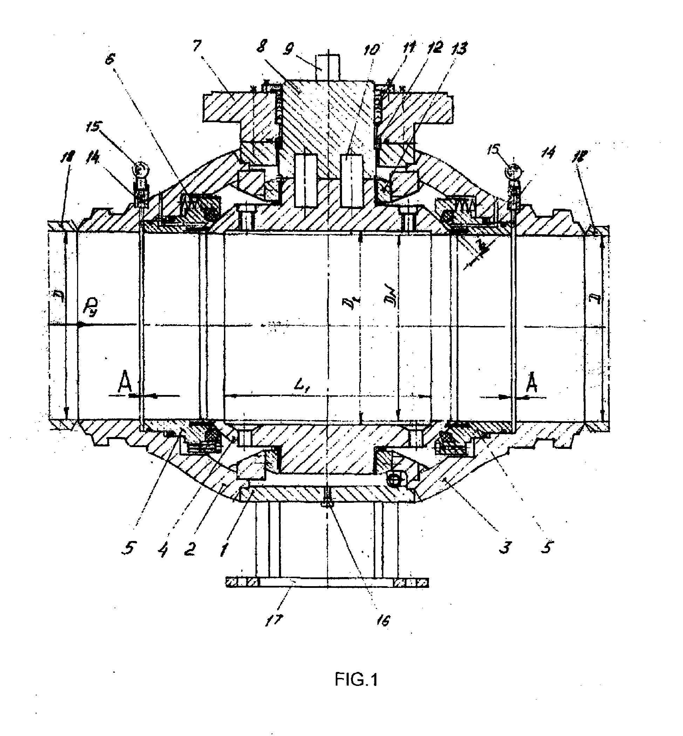

The ball condensate-picker cock is schematically shown in Figs. 1 to 10.

Fig. 1 shows a general view of a ball condensate-picker cock in an open state, where:
P_{y} is a conditional pressure, MPa, and a direction of gas movement;
DN is a passage diameter of the cock, DN=D;
D is an internal (rated) diameter of a header pipe;
D₁ is a bore diameter of a condensate-catcher plug;
L₁ is a bore length of the condensate-catcher plug;
Z is a gap between the plug and a seat;
A is a gap between a pipe junction and seat end faces.

Fig. 2 shows a general view of the condensate-catcher plug, where:
DN is a passage diameter of the plug;
D₁ is a bore/condensate-catcher diameter;
L is a length of the plug;
L₁ is a bore/condensate-catcher length.

Fig. 3 shows a general view of a condensate-picker semi-body, where
D₂ is an external diameter of a spindle flange;
D₃ is a diameter for assembling to a lock weld with pipe junctions;
L₂ is a semi-body shell length;
1 is a bore depth for assembling to a lock weld with pipe junctions.

Fig. 4 shows a general view of a condensate conduit and a condensate-picker semi-body along line B-B in Fig. 3.

Fig. 5 shows a general view of an (outlet) pipe junction where:
R₁ is a positive curvature radius;
R₂ is a negative curvature radius;
D₃ is a diameter for assembling to a lock weld with the semi-body;
I₁ is a protrusion length for the lock weld with the semi-body.

Fig. 6 shows a view of a recess in a lower condensate conduit stop, view C in Fig. 5.

Fig. 7 shows a view of a conduit for supplying a transported gas from the inlet pipe junction to the cock body in order to remove the condensate.

Fig. 8 shows a view of a seat where a cross-section of ports for feeding a lubricant (hermetic) to the plug is shown.

Fig. 9 shows a view of the seat in stopping a protective ring.

Fig. 10 shows a view of the cock body in repair.

A ball condensate-picker cock (see Fig. 1) comprises a welded body consisting of a semi-body I with inlet and outlet pipe junctions 2 and 3, a flush rotary ball condensate-catcher plug 4 on supports, two seats 5 pressed to the plug 4 by springs 6, a removable drive (hydraulic and pneumatic drive) flange 7, a spindle 8, pins 9 for driving from the spindle 8, pins 10 for driving the plug 4 from the spindle 8, seals 11 of a bearing 12, the spindle 8 and two bearings 13 of the plug 4. Each pipe junction 2 and 3 comprises back pressure valves 14 for removable manometers 15. The semi-body 1 comprises an opening and a blind plug 16 for draining leakages in testing the cock for leak-proofness. The cock is mounted onto a support 17 and welded to header pipes 18. The cock is flush, DN=D, of one-sided montage in a direction of gas movement, and is a condensate-picker.

The flush rotary ball condensate-catcher plug 4 being made by different production methods (turned of a rolled metal, forged, cast, punched-cast) of a length L (see Fig. 2) is provided with a central bore of a passage diameter DN having a dimension D₁ larger than an internal diameter D of a header pipe over a length L₁, and with two drain openings 19 having lead-in chamfers. The bore of the diameter D₁ over a length L₁ is made at the right angle to shut the condensate of and catch it, while the drain openings are arranged in the center of a plug bottom to overflow the condensate from the plug to the body. The dimensions D₁ and L₁ are taken from the condition of the rigidity the plug to provide the leak-proofness thereof in the cock. An upper part of the plug is provided with fabrication threw holes 20.

The welded body (see Fig. 1) is made of the semi-body 1 and two - inlet and outlet - pipe junctions 2 and 3 assembled between each other for two one-sided welds and the removable drive flange 7.

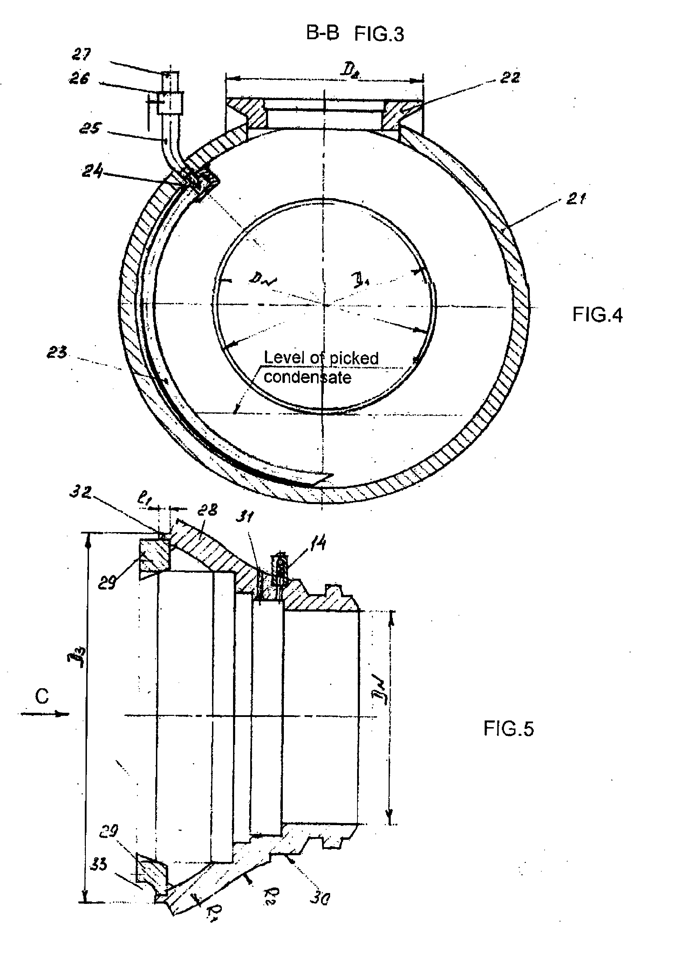

The welded body is formed (see Figs 3 and 4) as a cylindrical shell 21 and a spindle flange in the form of a pipe junction 22 having an external diameter D₂ and welded to the shell 21 normally to an axis thereof in the middle of its length L₂. The length L₂ is taken depending upon the diameter D₂, possibility of placing and welding a curvilinear pipe 23 of the internal part of the drainage conduit to the shell 21 by means of a transition 24 for exiting out of the body providing the most distance of two lock welds from the sealing rings of the sets when the body is welded. The flange 22 is provided with annular bores for the spindle 8 while the shell 21 is provided with end face bores of the diameter D₂ to a depth 1 for assembling with the pipe junctions 2 and 3, and with the opening having the plug 16.

The internal drainage conduit is formed as the curvilinear pipe 23 with a beveled inlet end face arranged in the center of the semi-body bottom. A level of the collected condensate in the cock body depends upon a diameter D₁ of the bore (recess) in the plug 4. The external drainage conduit (see Fig. 4) is made of a pipe 25 welded to the shell 21, a ball stopcock 26 and an outlet pipe junction 27. Each inlet and outlet pipe junction 2 and 3 comprises (see Fig. 5) a spherical pipe junction 28, two stops 29, and the back pressure valve 14 with the opening for the removable manometer 15 (see Fig. 1).

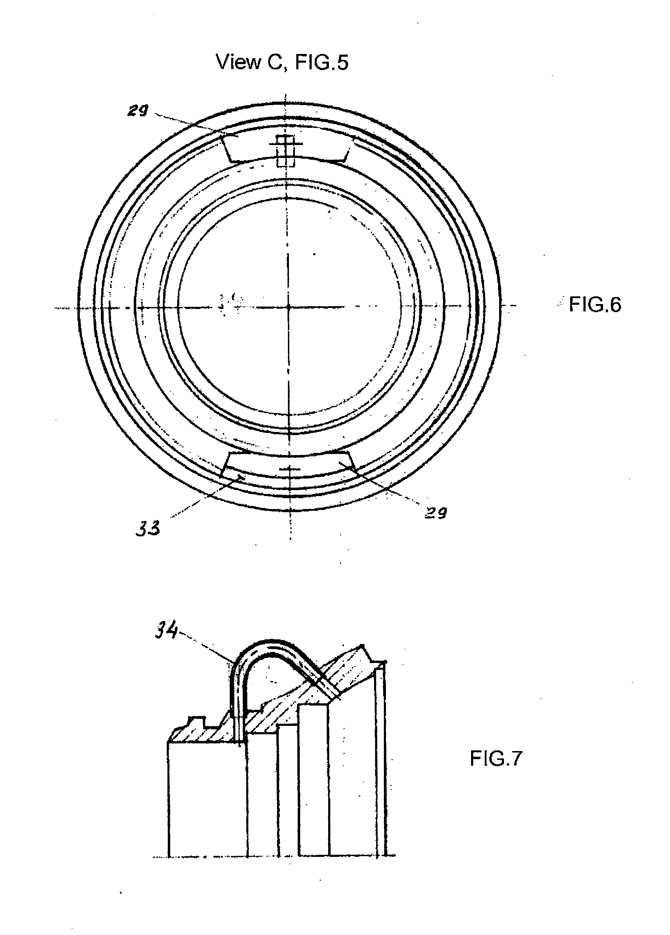

The spherical pipe junction 28 (see Fig. 5) is made with a spherical surface of positive curvature R₁ and negative curvature R₂ in a zone of placing the spring-loaded seat, a cylindrical-shape section 30 and ports 31 for feeding a lubricant to the plug in a zone of a small diameter of the seat holder. The internal surface of the spherical pipe junction 28 is made as concentric stepped cylindrical surfaces from the passage diameter DN to the diameter D₃ of the protrusion 32 (having the length I₁) of the lock for assembling with the semi-body and parallel end faces of steps. The lower stop 29 of the outlet pipe junction 3 is provided with an annular recess 33 (see Figs. 5 and 6) for passage and placement of the inlet section of the curvilinear pipe 23 of the internal drainage conduit. The outlet pipe junction comprises (see Fig. 7) a conduit 34 for supplying a transported gas to the body in order to remove the condensate out of the cock.

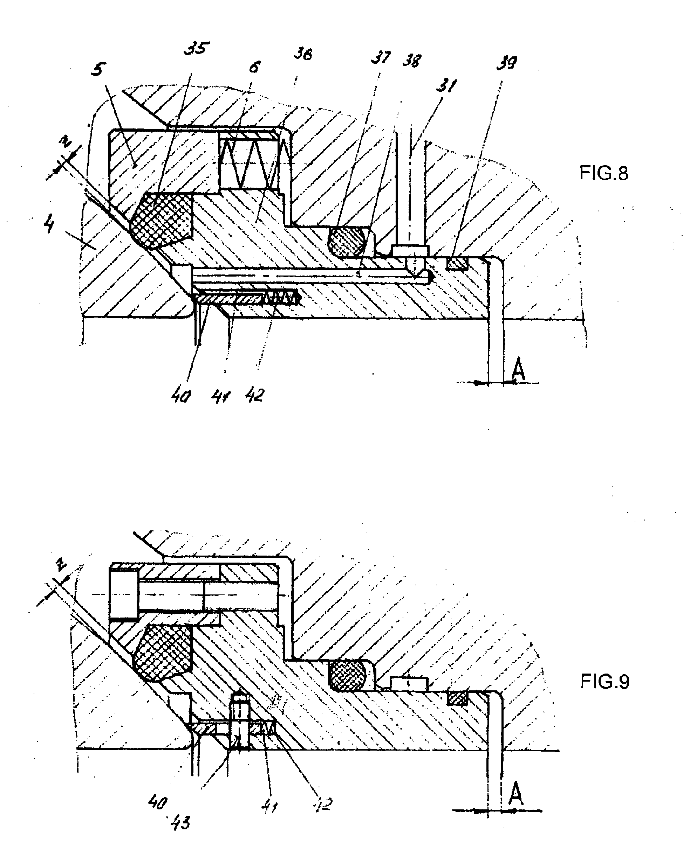

Each seat 5 (see Figs. 8 and 9) pressed to the plug 4 by the springs 6 at a gap Z in manufacture of the cock comprises a sealing polyurethane ring 35, a holder 36, a rubber piston ring 37, and ports 38 for feeding a lubricant (hermetic) to the plug 4 from the ports 31 of the pipe junction 2 or 3, and a protective rubber ring 39 which prevents the lubricant (hermetic) from passage to the gap A and to the cock. Each seat 5 is provided with a protective spring-loaded metal ring 40 contacting the ball surface of the plug 4 and being mounted in the holder 36 in a blind annular groove 41 with spring holes. Springs 42 press the protective ring 40 to the plug 4, and lock screws 43 preventing the protective ring 40 from falling out of the annular groove 41 of the holder 36 under action of the springs 42.

The ball condensate-picker cock has the broadened functionality and fulfils functions as follows: a ball cock/stop valve having an elongated service life in connection with the plug leak-proofness during running/thorough repairs and till discard up to 40 years in accordance with OTT ARMGAS-2006, and a ball condensate-picker cock for catching the condensate from header pipes, collecting the condensate into the body and pumping the condensate out of the body by a transported gas, for example, into a tank truck.

The ball condensate-picker cock operates as follows.

The transported non-aggressive natural gas according to OTS-3RA-98 and OTT ARMGAS-2006 of the OJSC "Gasprom" contains the condensate and mechanical impurities. The condensate is accumulated at the bottom of the pipes. When the gas and condensate at the pressure P_{y} pass through the cock (see Fig. 1) having the dimensions of the passage diameter DN in the pipe junctions 2 and 3, the seats 5 and partially the plug 4 equal to the internal diameter D of the head pipe 18, they pass without hydraulic losses to a reamer of the plug 4, said reamer having dimensions D₁ and L₁ (see Figs. 1 and 2). Having entered the reamer of the plug 4, the condensate is caught by the straight protrusion from DN to D₁ and is overflowed through the openings 19 having lead-in chamfers to the body 1 of the cock. The condensate is collected in the body 1 up to the level of contacting the diameter D₁ of the plug (see Fig. 4), and then is blown out through the drainage conduit 23-27 at the open ball cock 26 by the transported gas arriving at the body 1 along the conduit 34 (see Fig. 7) and through the hole 20 in the plug 4 (see Figs. 1 and 2). The ball stopcock 26 of the condensate conduit (see Fig. 4) controls the blow-out of the condensate from the body 1 of the cock when the plug 4 is in the closed and open positions in the cock.

The ball cock passes through several steps before discard:
- operation of the cock till loss of the plug leak-proofness in accordance with standards of the OJSC "Gasprom" (for a number of cycles or years) with check of a value of leakages based on a pressure drop determined by the manometers 15 in the inlet and outlet pipe junctions (see Fig. 1);
- elongation of the service life of the cock according to the plug leak-proofness by repairing the cock, pressing the lubricant (hermetic) into the cock till complete wear of the sealing ring by a value Z (for a number of cycles or years) with check of a value of leakages based on a pressure drop determined by the manometers 15 in the inlet and outlet pipe junctions, and based on a gap A increased by a value 1.41Z by means of ultrasonic, X-ray or magnetographic check at the cylindrical-shape section 30 (see Fig. 5) of the pipe junctions 2 and 3 (see Fig. 1) until the cock is cut out of the pipeline;
- elongation of the service life of the cock according to the plug leak-proofness by thorough repairs with replacement of the worn parts (see Figs. 1 to 10) at the enterprises of the OJSC "Gasprom" or the manufacturers.

At the first step, the cock operates as follows.

The transported non-aggressive natural gas with the condensate and mechanical impurities passes through the cock when the plug is in the open position. The leak-proofness of the plug 4 is provided by the seats 5 pressed in manufacture to the plug 4 with the gap Z by the spring 6 and the piston rubber rings 37 (see Fig. 8) under the pressure P_{y} (see Fig. 1).

Each seat 5 (see Fig. 8) comprises the protective ring 40 that is placed within the annular groove 41 of the holder 36, is pressed to the ball surface of the plug 4 by the springs 42, and protects the sealing ring 35 against destruction by solid mechanical impurities arrived from the pipeline in the transported gas at the gap between the plug and the seat. The protective ring 40 completely protects the gap between the plug 4 and the seat 5 from arrival of mechanical impurities when the plug 4 is in the open position in the cock in the two seats. When the plug 4 rotates, impurities can arrive with a swirl stream of the passing gas at the gap of the seat 5 between the sealing ring 35 and the protective ring 40 of the inlet pipe junction 2, cause damage to the sealing ring 35, and breaks the plug leak-proofness. Non-leak-proofness of the plug is recorded by the removable manometer 15 of the outlet pipe junction 3 when the plug 4 is in the closed position. Readings of the manometer 15 are graduated depending upon the value of leakages that, for example, in the cock having DN 300 mm and PN 80, are from 0 to 40 cm³ per minute in the ground tests at the stand of the OJSC "Gasprom." When the reading of the manometer corresponds to the limit leakage value, for example 40 cm³ per minute, an actual value of the gap A in the outlet and inlet pipe junctions is measured to estimate a wear value of the sealing rings 35 in the seats of the outlet and inlet pipe junctions, and a decision is made with respect to the running repair of the cock in order to recover the plug.

At the second step, the cock operates as follows.

It is possible now to press the lubricant (hermetic) into the cock in both the open and closed positions of the plug in the cock, said pressure performed through the ports 31 and 38 in the plug 4 (see Fig. 8) until the lubricant fills a volume of the ring with the gap Z between the sealing and protective rings 35 and 40. The volume of the lubricant for filling the gap between the plug and the seat is calculated for each cock size. The cock is filled by the lubricant, for example, dosed by a screw press. Recovery of the plug leak-proofness in the cock is estimated based on readings of the manometer 14 of the outlet pipe junction 3.

The service life of the cock with the lubricant (hermetic) pressed into the cock at provision of the plug leak-proofness in the cock during the running repair continues until the sealing ring is completely worn by the value Z. When the gap between the plug and the seat is zero, a volume for pressing the lubricant is absent. The gap A between the end faces of the holder 36 and the pipe junctions 2 or 3 will increase by the value 1.41Z (see Figs. 1-10). Results of measuring the gap A represent the basis to cut the cock out of the pipeline and sending the cock to the thorough repair.

Prolongation of the service life of the cock according to the plug leak-proofness during thorough repairs with replacement of the worn parts is carried out at the enterprises of the OJSC "Gasprom" or the manufacturers as follows.

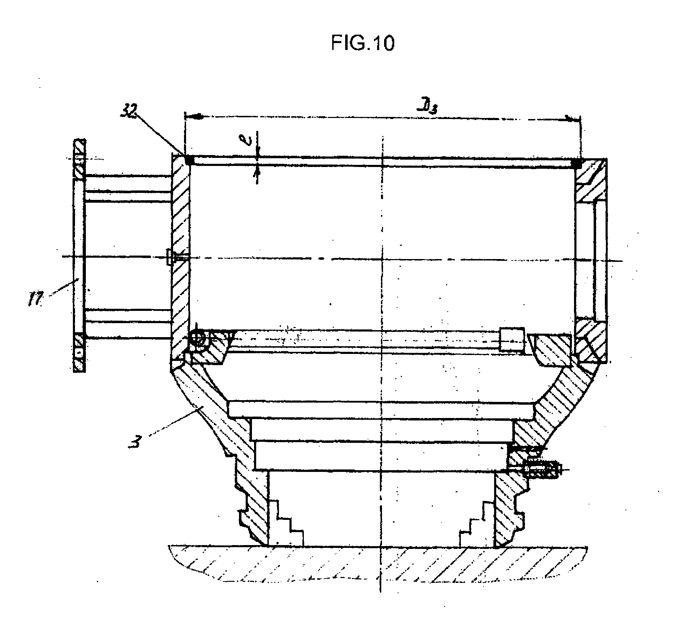

The flange 7, the spindle 8, the pins 9 and 10, the seal 11 and the bearing 12 are taken away from the cock (see Fig. 1). The cock is installed, for example, to a rotary-table machine with the outlet pipe junction 3 directed downward, and cut the inlet pipe junction 2 off along the sealing weld, having kept the diameter D₂ of the spindle flange 22 (see Fig. 3). The plug 4 and the bearings 13 (see Fig. 2) are removed as well as the seat 5 of the inlet pipe junction 2 (see Figs. 8 and 9). Fig. 10 shows the cock body after disassembling. To repair it, the protrusion 32 should be cut out and the end face bore should be recovered with the diameter D₃ to the depth 1. It is necessary to weld a metal for the protrusion 32 and recover the dimensions D₃, I₁ and the chamfer for assemblage with the semi-body (see Figs. 3 and 4) in the cut-off pipe junction 2 (see Fig. 5). It is necessary to defect the dimensions, shape and material state of the plug (see Fig. 2), the condensate conduit 23-27 (see Figs. 3 and 4), the pipe junctions 2 and 3 and the conduit 34 (see Fig. 7), and the seats 5 (see Figs. 8 and 9). It is necessary to replace the springs 6 and 42, the sealing ring 35, the rubber rings 37 and 39, the protective ring 40 and the lock screws 43 in the seats. It is necessary to assembly the repaired seats 5 with the recovered pipe junction 2 and the body (see Fig. 10) and subject them to the density test by the pressure Pₜₑₛₜ=1.2P_{y}. It is necessary insert the plug into the body (see Fig. 2), to assembly the cock with the inlet pipe junction 2 and the seat 5, to check a rotation of the plug in the cock according to the technical requirements, and to weld the pipe junction 2 to the semi-body 1. It is necessary to assembly the cock with the removable parts in accordance with Fig. 1, to test the cock for leak-proofness and workability, and to certify for further exploitation according to the technical requirements of OTS-3RA-98 and OTT ARMGAS-2006 of the OJSC "Gasprom." The design of the inventive cock allows the thorough repair both at the cock manufacturers and the enterprises of the OJSC "Gasprom" with the proviso for delivery of spare pars from the cock manufacturers.

The present invention allows to broaden the technical functionality of the cock.

The cock/stop valve made with the passage diameter DN equal to the internal diameter D of the header pipe allows as follows:
- increase of the passage diameter of cocks from DN 300-1400 mm, PN 80, by 4.0-74.6 mm as compared to cocks made according to API 6D (see Table 1);
- provision of boring in the plug from the passage diameter DN for PN 20-100 (see Table 1);
- increase of the gas passage volume in main pipelines having DN 300-1400 mm and PN 80 by 6.8-1254.42 millions of cubic meters per year as compared to cocks made according to API 6D (see Table 1);
- provision of passage of the cleaning and diagnosing equipment;
- provision of boring in the plug from the diameter DN to the diameter D₁, manufacture of "a recess" for catching the condensate, and provision of development of a condensate-picker cock.

The embodiment of the welded body of the cock with two parts - the semi-body (shell), the inlet and outlet pipe junctions with an external shape allows as follows:
- rearrangement of the condensate conduit into the cock and provide the cock with the additional functions of a condensate-picker;
- execution of operating check of the plug for leak-proofness according to readings of the removable manometers;
- execution of the running repair of the cock according to the plug leak-proofness (by pressing the hermetic into the cock) in accordance with readings of the removable manometers and a value of the dimension A (the sealing ring wear);
- execution of the thorough repair at the consumer's places at the enterprises of the OJSC "Gasprom."

Use of the protecting ring allows as follows:
- decrease of the lubricant (hermetic) volume during the running repair of the cock to recover the plug leak-proofness;
- increase of the service life of the sealing rings lubricated by the hermetic pressed to the sealing ring by the passing gas at the pressure P_{y};
- increase of the service life of the cock up to 40 years according to the requirements of OTT ARMGAS-2006 with taking into account all improvements in the cock.

**Table 1**

| Pipeline parameters according to GOST | | | | | Cock parameters according to API 6D | | | | | | | | Cock parameters according to OTT ARMGAS-2006, GOST 28388 | | | |
|---|---|---|---|---|---|---|---|---|---|---|---|---|---|---|---|---|
| mm | PN according to ISO | Pipe dimensions | | Q_{rated}, mil. m³/year | D₁, mm | D-D₁, mm | K_{D} | L_{COCK}, mm | L_{MS}, mm | K_{L} | Q_{actual}, mil. m³/year | AQ, mil. m³/year | DN, mm (DN=D) | K_{D} | Q_{actual}= Q_{rated}, mil. M³/year | ΔQ, mil. m³/ year |
| | | D_{H}×S, mm | D, mm | | | | | | | | | | | | | |
| 300 | 64 (80) 100 | 8 | 309 | 361 | 305 | 4 | 0.966 | 762 | 100 | 0.56 | 354.127 | 6.873 | - | | | |
| | | 325×10 | 305 | | | -4 | 1.030 | - | - | - | | | 305 | 1.0 | 361 | 0 |
| | | 12 | 301 | | | -8 | 1.034 | 834 | 100 | 0.55 | 361.0 | 0.0 | 301 | | | |
| 400 | 64(80) 400 | 12 | 402 | 1022 | 387 | 15 | 0.905 | 902 | 100 | 0.52 | 971.513 | 50.487 | - | | | |
| | | 426×14 | 398 | | | 11 | 0.929 | - | - | - | | | | 1.0 | 1022 | 0 |
| | | 14 | 398 | | | 11 | 0.92-9 | 991 | 100 | 0.56 | 981.366 | 40.634 | 398 | | | |
| 500 | 64 (80) 100 | 9 | 512 | 1600 | 489 | 23 | 0.887 | 1054 | 250 | 0.53 | 1504.176 | 95.824 | - | | | |
| | | 530×10 | 510 | | | 21 | 0.896 | - | - | - | | | 510 | 1.0 | 1600 | 0 |
| | | 12 | 506 | | | 17 | 0.914 | 1194 | 250 | 0.59 | 1518.816 | 81.184 | 506 | | | |
| 700 | 64 (80) 100 | 10 | 700 | 4000 | 686 | 14 | 0.949 | 1397 | 360 | 0.51 | 3895.96 | 104.040 | - | | | |
| | | 720×10 | 700 | | | 14 | 0.949 | - | - | - | | | 700 | 1,0 | 4000 | 0 |
| | | 11.3 | 697.4 | | | 11.6 | 0.956 | 1550 | 360 | 0.56 | 3896.96 | 103.040 | 697.6 | | | |
| 1000 | 64 (80) 100 | 1.4 | 992 | 8700 | 978 | 14 | 0.964 | 1983 | 500 | 0.51 | 8540.268 | 159.732 | - | | | |
| | | 1020×16 | 988 | | | 10 | 0.949 | - | - | - | | | | 1.0 | 8700 | 0 |
| | | 16 | 988 | | | 10 | 0.974 | 2083 | 500 | 0.53 | 8580.114 | 119.886 | 988 | | | |
| 1200 | 64 (80) 100 | 14.5 | 1191 | 13300 | 1168 | 23 | 0.949 | 2261 | 500 | 0.47 | 12981.20 | 318.801 | - | | | |
| | | 1220×15.5 | 1189 | | | 21 | 0.954 | | | - | | | 1189 | 1.0 | 13300 | 0 |
| | | 22.0 | 1176 | | | 8 | 0.982 | 2489 | 500 | 0.51 | 13177.906 | 122.094 | 1176 | | | |
| 1400 | 64 (80) 100 | 15.7 | 1388.6 | 20200 | 1314 | 74.6 | 0.865 | 2520 | 500 | 0.46 | 18945.58 | 1254.420 | - | | | |
| | | 1420×18.7 | 1382.6 | | | 68.6 | 0.875 | - | - | - | | | 1382.6 | 1.0 | 20200 | 0 |
| | | 26.0 | 1368.0 | | | 54.0 | 0.899 | 3257 | 500 | 0.57 | 19037.06 | 1162.940 | 1368.0 | | | |

| | | | | | | | | | | | | | | | | |
|---|---|---|---|---|---|---|---|---|---|---|---|---|---|---|---|---|
| where: Q_{rated} is a year rated pipeline throughput, mil. m³/year ([1], p. 71); K_{D}=(D₁/D)^{2.6} is a coefficient of hydraulic losses in the pipeline depending upon reduction of the passage diameter D₁(D₁ N) of the cock relative to the internal diameter D of the pipe ([1], p. 27); K_{L}=(L_{cock}+Lₘₛ)/5D₁ is a coefficient of hydraulic losses in the pipeline depending upon a length of a reduced diameter of the cock; ΔQ=Q_{rated}(1-K_{D})K_{L} - the volume of the gas delivery reduction because of losses in the cock. [1]: E.F. Novoselov, A.1. Grigor'ev, E.M. Mufrakhov. "Tipovye raschety pri proectirovanii i ekspluatatsii gasoprovodov", Moscow, "Nedra" (The Depth Publishers), 1982. | | | | | | | | | | | | | | | | |

## Claims

1. A ball cock comprising: a welded body (1) with inlet (2) and outlet (3) pipe junctions; a drainage conduit (23, 25), spindle flanges and a plug drive, a flush rotary-on-supports ball plug (4); two spring-loaded seats (5) with sealing rings (35) and holders (36) mounted into the pipe junctions (2, 3) so as to interact with a surface of the ball plug (4), ***characterized in that*** the flush rotary-on-supports ball plug (4) being made by different production methods is provided with a central bore of a passage diameter DN having a dimension D₁ larger than an internal diameter D of a header pipe (18) weldable to the inlet and outlet pipe junctions (2,3), over a length L₁, and with two drain openings (19) having lead-in chamfers positioned at the bore end faces in the center of the plug bottom, and the drainage conduit (23, 25) is made of two - internal (23) and external (25) - parts, the internal part (23) being formed as a curvilinear pipe with a beveled inlet end face and a straight outlet end face welded to a transition for exiting out of the body (1), wherein the inlet end face of the internal drainage conduit (23) is arranged in the center of a bottom of a semi-body (1) and the outlet end face is made of a pipe (25) welded to the body (1), a ball stopcock (26), and an outlet pipe junction (27).

2. The ball cock according to claim 1, ***characterized in that*** the welded body is made of a semi-body (1) and two pipe junctions (2,3) assembled with the flush rotary ball plug (4), two seats (5) and between each other for two one-sided lock welds, of the welded drainage conduit and a removable plug drive flange (7), wherein the semi-body (1) is formed as a cylindrical shell (21) and a spindle flange in the form of a pipe junction (22) welded to the shell (21) normally to an axis thereof in the middle of its length taken depending upon the possibility of placing and welding a curvilinear pipe of the internal part of the drainage conduit to the shell (21), an external diameter of the spindle flange and the most distance of two lock welds from the sealing rings of the seats in welding the body, with the spindle and shell branch pipe diameter end face bores, and each pipe junction (2,3) comprises a spherical pipe junction (28), two stops (29) to support bearings of the flush rotary ball plug (4), a conduit for supplying a transported gas to the body, and a back pressure valve (14) with an opening for a removable manometer (15), wherein the spherical pipe junction (28) is provided with a spherical surface of positive (R₁) and negative (R₂) curvature in a zone of placing the spring-loaded seat, and of a cylindrical-shape section (30) in a zone of a small diameter of the seat holder, and with the internal surface formed as concentric stepped cylindrical surfaces from the passage diameter DN to a protrusion diameter of a lock for assembling with the semi-body (1) and parallel end faces of steps, and a lower stop (29) of the outlet pipe junction (3) is provided with an annular recess (33).

3. The ball cock according to claim 1, ***characterized in that*** each spring-loaded seal (5) with the sealing ring (35) and the holder (36) is provided with a protective spring-loaded brass ring (40) contacting the ball surface of the plug (4) and being mounted in a blind annular groove (41) with spring holes, springs (42) pressing said protective ring (40) to the plug (4), and lock screws (43) preventing the protective ring (40) from falling out of the holder (36) under action of springs (42).

## Patentansprüche

1. Kugelventil, umfassend: einen geschweißten Körper (1) mit Einlass (2)- und Auslass (3)-Rohrverbindungen; eine Ablaufleitung (23, 25), Spindelflansche und einen Verschlussantrieb, einen fluchtenden drehend-auf-Trägern-Kugelverschluss (4), zwei federbelastete Sitze (5) mit Dichtungsringen (35) und Haltern (36), in den Rohrverbindungen (2, 3) montiert, um mit einer Oberfläche des Kugelverschlusses (4) zusammenzuwirken, **dadurch gekennzeichnet, dass** der fluchtende drehend-auf-Trägern-Kugelverschluss (4), der durch verschiedene Herstellungsverfahren hergestellt ist, mit einer mittigen Bohrung versehen ist mit einem Durchgangsdurchmesser DN mit einem Abmaß D₁, der über eine Länge L₁ größer als ein Innendurchmesser D einer an den Einlass- und Auslassrohrverbindungen (2, 3) schweißbaren Sammelrohrleitung (18) ist, und mit zwei Ablauföffnungen (19) mit an den Bohrungsendflächen in der Mitte des Verschlussbodens positionierten Einführschrägen, und die Ablauftleitung (23, 25) aus zwei Innen (23)- und Außen (25)-Teilen hergestellt ist, wobei der Innenteil (23) als ein gekrümmtes Rohr ausgebildet ist mit einer abgeschrägten Einlassendfläche und einer geraden Auslassendfläche, an einem Übergang zum Austreten aus dem Körper (1) geschweißt, wobei die Einlassendfläche der Innenablaufleitung (23) in der Mitte eines Bodens eines Halbkörpers (1) angeordnet ist und die Auslassendfläche aus einem an dem Körper (1) angeschweißten Rohr (25), einer Kugelstoppventil (26) und einer Auslassrohrverbindung (27) hergestellt ist.

2. Kugelventil nach Anspruch 1, **dadurch gekennzeichnet, dass** der geschweißte Körper aus einem Halbkörper (1) und zwei Rohrverbindungen (2, 3), mit dem fluchtenden Drehkugelverschluss (4) gesammelt, zwei Sitzen (5) und zwischen sich für zwei einseitigen Verriegelungsschweißungen, aus der geschweißten Ablaufleitung und einem entfernbaren Verschlussantriebsflansch (7) hergestellt ist, wobei der Halbkörper (1) ausgeformt ist als eine zylindrische Schale (21) und ein Spindelflansch in Form einer Rohrverbindung (22), angeschweißt an der Schale (21), normalerweise an einer Achse davon, in der Mitte der Länge genommen abhängig von der Möglichkeit des Anbringens und Schweißens eines gekrümmten Rohrs des Innenteils der Ablaufleitung an der Schale (21), ein Außendurchmesser des Spindelflansches und der größte Abstand der zwei Verriegelungsschweißungen von den Dichtungsringen der Sitzen beim Schweißen des Körpers, mit der Spindel und Schalenabzweigrohrdurchmesserendflächenbohrungen, und jede Rohrverbindung (2, 3) eine sphärische Rohrverbindung (28), zwei Anschläge (29) zum Unterstützen von Trägern des fluchtenden Drehkugelverschlusses (4), eine Leitung zum Zufuhr von einem transportierten Gas zum Körper und ein Rückschlagventil (14) mit einer Öffnung für einen entfernbaren Druckmesser (15) umfasst, wobei die sphärische Rohrverbindung (28) mit einer sphärischen Oberfläche mit positiver (R₁) und negativer (R₂) Krümmung in einer Zone zum Anbringen des federbelasteten Sitzes und einem zylindrischen Abschnitt (30) in einer Zone von einem kleinen Durchmesser des Sitzhalters versehen ist, und wobei die Innenfläche, geformt als konzentrisch gestufte zylindrische Oberflächen vom Durchgangsdurchmesser DN zu einem Vorsprungsdurchmesser einer Sperre zum Sammeln mit dem Halbkörper (1) und parallellen Endflächen von Stufen, und ein niedriger Anschlag (29) der Auslassrohrverbindung (3) mit einer ringförmigen Aussparung (33) versehen ist.

3. Kugelventil nach Anspruch 1, **dadurch gekennzeichnet, dass** jeder federbelastete Sitz (5) mit dem Dichtungsring (35) und dem Halter (36) mit einem schützend federbelasteten Messingring (40) versehen ist, der mit der Kugeloberfläche des Verschlusses (4) in Kontakt ist und in einer blinden ringförmigen Rille (41) montiert ist mit Federlöchern, Federn (42), die den schützenden Ring (40) zum Verschluss (4) pressen, und Verriegelungsschrauben (43), die verhindern, dass der schützende Ring (40) raus aus dem Halter (36) unter Einwirkung von den Federn (42) herausfällt.

## Revendications

1. Robinet à flotteur comprenant: un corps soudé (1) avec des raccords à tuyau d'entrée (2) et de sortie (3); un conduit de drainage (23, 25), des brides d'arbre et un entraînement d'obturateur, un obturateur à bille aligné et rotatif sur supports (4), deux sièges à ressort (5) avec des anneaux d'étanchéité (35) et des supports (36) montés dans les raccords à tuyau (2, 3) de manière à interagir avec une surface de l'obturateur à bille (4), **caractérisé en ce que** l'obturateur à bille aligné et rotatif sur supports (4) étant réalisé par différents procédés de production est pourvu d'un alésage central d'un diamètre de passage DN ayant une dimension D₁ supérieure à la dimension du diamètre intérieur D d'un tuyau d'en-tête (18) soudable aux raccords à tuyau d'entrée et de sortie (2, 3) sur une longueur L₁, et avec deux ouvertures de drainage (19) ayant des chanfreins d'entrée disposés aux surfaces d'extrémité de l'alésage au centre du fond de l'obturateur, et le conduit de drainage (23, 25) est constitué de deux parties - intérieure (23) et extérieure (25), la partie intérieure (23) étant réalisée sous la forme d'un tuyau curviligne avec une face d'extrémité d'entrée chanfreinée et une face d'extrémité de sortie droite soudée à une transition pour la sortie hors du corps (1), la face d'extrémité d'entrée du conduit de drainage intérieur (23) étant arrangée au centre d'un fond d'un demi-corps (1) et la face d'extrémité de sortie étant constituée d'un tuyau (25) soudé sur le corps (1), un robinet d'arrêt sphérique (26), et un raccord à tuyau de sortie (27).

2. Robinet à flotteur selon la revendication 1, **caractérisé en ce que** le corps soudé est constitué d'un demi-corps (1) et de deux raccords à tuyau (2, 3) assemblés avec l'obturateur à bille rotatif et aligné (4), de deux sièges (5) et entre elles pour deux soudures de verrouillage d'un seul côté, du conduit de drainage soudé et d'une bride d'entraînement d'obturateur amovible (7), le demi-corps (1) étant formé comme un boîtier cylindrique (21) et une bride d'arbre dans la forme d'un raccord à tuyau (22) soudé au boîtier (21) perpendiculaire à un axe de celui-ci au milieu de sa longueur prise en fonction de la possibilité de placer et souder un tuyau curviligne de la partie intérieure du conduit de drainage au boîtier (21), un diamètre extérieur de la bride d'arbre et la plus grande distance de deux soudures de blocage à partir des anneaux d'étanchéité des sièges en soudant le corps, avec l'arbre et des alésages de face d'extrémité de diamètre de tuyau de branche de boîtier, et chaque raccord à tuyau (2, 3) comprend un raccord à tuyau sphérique (28), deux butoirs (29) pour supporter des paliers de l'obturateur à bille rotatif et aligné (4), un conduit pour fournir un gaz transporté au corps, et une soupape de contrepression (14) avec une ouverture pour un manomètre amovible (15), le raccord à tuyau sphérique (28) étant pourvu d'une surface sphérique d'une courbure positive (R₁) et négative (R₂) dans une zone pour placer le siège à ressort, et d'une section cylindrique (30) dans une zone d'un petit diamètre du support de siège, et la surface intérieure étant formée comme des surfaces cylindriques en gradins concentriques à partir du diamètre de passage DN à un diamètre de saillie d'un verrouillage pour assemblage avec le demi-corps (1) et des faces d'extrémité parallèles d'étapes, et un butoir inférieur (29) du raccord à tuyau de sortie (3) est pourvu d'un évidement annulaire (33).

3. Robinet à flotteur selon la revendication 1, **caractérisé en ce que** chaque siège à ressort (5) avec l'anneau d'étanchéité (35) et le support (36) est pourvu d'un anneau de protection à ressort en laiton (40) en contact avec la surface à bille de l'obturateur (4) et étant monté dans une fausse rainure annulaire (41) avec des trous de ressort, des ressorts (42) poussant ledit anneau de protection (40) à l'obturateur (4) et des vis de verrouillage (43) empêchant l'anneau de protection (40) de tomber hors du support (36) sous l'action de ressorts (42).
